Europäisches Patentamt
European Patent Office
Office européen des brevets

(11) Publication number: **0 329 441 A1**

# EUROPEAN PATENT APPLICATION

(21) Application number: 89301490.2

(22) Date of filing: 16.02.89

(51) Int. Cl.[4]: C 08 F 220/10
C 08 F 299/06
//(C08F220/10,299:06,220:10),
(C08F299/06,220:28,220:28,
220:30,230:02,220:02)

(30) Priority: 19.02.88 US 157829 04.11.88 US 267410

(43) Date of publication of application:
23.08.89 Bulletin 89/34

(84) Designated Contracting States: DE FR GB IT NL

(71) Applicant: UVEXS INCORPORATED
1025 Terra Bella Avenue
Mountain View California 94043 (US)

(72) Inventor: Puder, Allen Brent
10117 Andriana Avenue
Cupertino California (US)

(74) Representative: Lewin, John Harvey et al
ELKINGTON AND FIFE Beacon House 113 Kingsway
London WC2B 6PP (GB)

(54) **UV curable conformal coating with improved low temperature properties.**

(57) Conformal coating compositions which contain acrylated urethane oligomer, aliphatic monofunctional acrylate esters or a polybutadiene diacrylate or a polyoxyalkylated diacrylate or a monofunctional acryalte of the formula

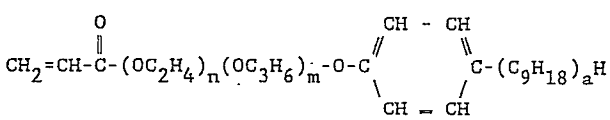

which has a viscosity in the range of 0.1 to 0.2 Pa•s, isobornyl acrylate or isobornyl methacrylate, a photoinitiator, and polymerization inhibitor exhibit low temperature flexibility and thermal shock resistance. These compositions can be made to have shadow curing ability by including in the composition an organic peroxide which has a 10 hour half life temperature of 85°C. to 105°C. The compositions are solventless and one package. These conformal coatings are useful to coat printed wire boards or printed circuit boards.

EP 0 329 441 A1

## Description

## UV CURABLE CONFORMAL COATING WITH IMPROVED LOW TEMPERATURE PROPERTIES

This invention relates to ultraviolet curable compositions which are useful in the electronics industry, especially for coating printed wire boards.

Materials for the electronics industry need to meet stricter requirements because the electronic devices are becoming smaller and more complex. The field of printed circuit boards is no exception. The various coatings require that the materials protect the electronic devices and components from the environments which they may encounter either during processing or in use. Coating printed circuit boards with compositions which will cure to a film and which will provide the required protection without changing the designed electronic properties or otherwise damage the boards components is difficult to achieve because the components are very small and often of shapes and design which demands compositions which have special uncured properties, special curing properties and special application properties.

Printed circuit boards often need to be protected from contamination of the electrical and electronic components. This protection can be provided by coating or encapsulating the device bearing board with a protective film to avoid or minimize the reduction in the electrical performance due to contamination. Moisture and humidity are considered to be the worst contaminant because it must be dealt with in most environments. Moisture and humidity can drastically lower insulation resistance between conductors, accelerate high voltage breakdown, accelerate dendritic growth, and corrode the conductors. Other than moisture, chemical contaminants from the environment such as dust, dirt, solvents, acids, fungus, oils and fuels or which are used in the manufacturing process such as organic solvents, fluxes, vapors, acids, release agents, and metal dust. Handling a printed circuit board can also cause contamination, for example, from fingerprints. Conformal coatings are also used to protect the electronic components from the harmful aspects of extremes in temperature, shock and abrasion.

Many conformal coatings and potting compositions are known in the art and are available commercially. Each has its advantages and disadvantages. One prior art conformal coating material is based on acrylics. Acrylic coatings make excellent coating and potting systems because they have desirable electrical and physical properties, are resistant to fungus growth, have a long life, low or no exotherm during cure, and have little or no shrinkage during cure. From some viewpoints, the acrylic coating systems have a production advantage because they can be readily applied by spraying, dipping, or brushing. However, this is also a disadvantage because the films are formed from solvent containing acrylic systems. The evaporation of the solvent is a slow and expensive step and the solvent vapors need to be controlled for environmental reasons. The solvents typically used are the chlorinated solvents, such as trichloroethane and methylene chloride.

The combined impact of high energy costs and more stringent control regulations which restrict emissions of volatile solvents into the atmosphere has created a need in the coatings industry for high solids or solventless systems which do not require a large amount of energy for conversion of the system into a high performance coating. Coatings which are 100% solids are known and have a rapid cure at a relatively low conversion energy demand. Such coatings are acrylated coatings which cure by ultraviolet radiation or by electron beam exposure. These systems are considerably more expensive than solvent and water based coatings and suffer from poor adhesion to many substrates.

Each of the prior art systems have advantages which makes them desirable, however, each of these systems have disadvantages. For example, a composition which can be cured by cationic UV curing with a heat post cure has the disadvantage of providing films with poor electrical properties. Compositions which can be cured by UV and by moisture post cure have the disadvantage of having poor pot life during processing. Poor pot life is also observed when two part compositions are used.

The problem facing the researcher is how to make a composition which has flexibility, has good thermal shock properties, has good electrical properties, cures fast, and can protect circuit boards from damaging environments, and which still maintains the other desirable properties required by conformal coating for printed circuit boards.

The present invention solves the above problem in a comprehensive way which was very difficult because of the evasive characteristics and complex nature of the variables involved when combining ingredients which might be useful in ultraviolet radiation curable compositions. This invention is the best solution to the stated problems.

This invention combines the toughness of certain resins, low shrinkage of monofunctional nonpolar monomers, low $T_g$ resins and monomers, and adhesion promoting monofunctional and difunctional monomers. The compositions of this invention have low temperature flexibility and good thermal shock resistance and electrical properties. The composition can be post cured using a peroxide which is stable at normal room temperature processing and has a long shelf life, such as six months. The composition can also contain a fire retardant. These features are obtained without the use of solvents and can be applied to substrates by dip coating, by spray coating, and brushing because of the low viscosity.

This invention relates to a ultraviolet curable composition consisting essentially of a blend of (A) 20 to 45 weight percent of an acrylated urethane oligomer containing an average of about 2 acryl groups selected from the group consisting of acrylate and methacrylate, said acrylated urethane oligomer being based on aliphatic isocyanate, and having a number average molecular weight of from 1,000 to 6,000, (B) 5 to 25 weight percent of

an acrylate selected from the group consisting of an aliphatic monofunctional acrylate ester having a molecular weight less than 1,000, a polybutadiene diacrylate having a molecular weight less than 4,000, a polyoxyalkylated diacrylate having a molecular weight less than 1,000, and a monofunctional acrylate of the general formula

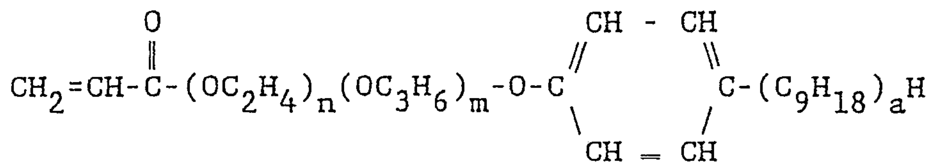

in which at least one of n or m is at least 1 and the total average value of n and m is sufficient to provide a viscosity at 25°C. of 0.01 to 0.2 Pa•s, and a is 0 or 1, (C) 9.5 to 40 weight percent of an aliphatic bicyclic monofunctional acrylate monomer selected from the group consisting of isobornyl acrylate, isobornyl methacrylate, dicyclopentenyloxyethyl acrylate, and dicyclopentenyloxyethyl methacrylate, (D) 0.5 to 6 weight percent of photoinitiator, (E) 0 to 10 weight percent of an acrylate ester having at least three acrylate or methacrylate groups per molecule and having a molecular weight less than 600, (F) 0 to 8 weight percent of a peroxide having a 10 hour half life temperature of from 85°C. to l05°C. inclusive, (G) 0 to 10 weight percent of a hydroxy-containing acryl monomer selected from the group consisting of hydroxyalkylacrylate and hydroxyalkylmethacrylate, (H) 0 to 20 weight percent of a fire retardant, (I) 0 to 6 weight percent of an adhesion promoter, (J) 1 to 1,000 ppm of polymerization inhibitor in which the inhibitor is derived from 0 to 100 ppm of 4-methoxyphenol, 0 to 500 ppm of hydroquinone, and 0 to 500 ppm of phenothiazine, (K) 0 to 0.015 weight percent of a fluorescent dye, and the composition has a viscosity at 90°F. of less than 1 Pa•s.

The compositions of the present invention are curable by exposure to ultraviolet radiation and also can be formulated so that they can be cured by exposure to heat. The present compositions can be cured by exposure to ultraviolet radiation and still be made to possess the ability to cure by heating, i.e., post curing or shadow curing. The present conformal coating compositions can be used to coat circuit boards which have complex devices or components which have undercuts, i. e., regions or locations where the coating composition will be out of sight of the ultraviolet radiation and thus would remain uncured. Compositions intended to be used for coating such circuit boards having devices with undercuts should have the ability to cure in the shadowed areas and would be formulated to contain peroxide of ingredient (F). However, the compositions of the present invention have the ability to cure via heating and thus the regions or locations which are not exposed to the ultraviolet radiation can be cured by exposure to heat. The amount of heat and the duration of the heating necessary with the present composition is relatively low. The ability to cure the compositions with low amounts of heat is important because many of the electronics materials and construction can be effected by exposure to high temperatures or to heat for long durations.

The compositions of the present invention contain from 20 to 45 weight percent of an acrylated urethane oligomer, ingredient (A) in which there is an average of about 2 acrylate or methacrylate groups. These urethane oligomers are based on aliphatic isocyanate and have a number average molecular weight of from 1,000 to 6,000. The aliphatic isocyanates are preferably diisocyanates including 1,6-hexamethylene diisocyanate, 1,4-hexamethylene diisocyanate, 2,2,4-trimethylhexamethylene diisocyanate, 2,4,4-trimethylhexamethylene diisocyanate, 4,4′-methylenebis(cyclohexyl)isocyanate, isophorone diisocyanate, and 1-methyl-2,4-diisocyanatecyclohexane. The acrylated urethane oligomers are known in the art and those which are particularly useful in the present invention are those which are described in U.S. Patent No. 4,607,084, issued August 19, 1986, to Morris, which shows the acrylated urethane oligomers and their preparation.

The acrylated urethane oligomers can be mixtures of two or more different oligomers or prepolymers. For example, a preferred mixture for ingredient (A) is a mixture of at least two different molecular weight acrylated urethane prepolymers, and a mixture of an acrylated urethane prepolymer and a polyester urethane acrylate, which is also a preferred ingredient for (A). The acrylated urethane prepolymer provides strength to the cured films and the polyester urethane acrylate provides elongation to the cured films. They can also be blends, such as those prepared from polyether diols and polyether triols. The acrylated urethane oligomers can also contain reactive solvents. Such reactive solvents include alkyl acrylates, alkyl methacrylates, alkoxyalkyl acrylates, alkoxyalkyl methacrylates, allyl acrylate, phenoxyethyl acrylate, cyclohexyl acrylate, 1,6-hexanediol diacrylate, trimethylolpropane triacrylate, acrylated fatty alcohols, and acrylated aliphatic diglycidyl ethers. A preferred reactive solvent is ethoxyethoxyethyl acrylate. The reactive solvent can be present in amounts of from 0 to 50 weight percent based on the total weight of the acrylated urethane oligomer. Preferably, if the reactive solvent is present, it is present in an amount of from about 10 to about 20 weight percent.

For the purposes of this invention, the term "oligomer", and "prepolymer" are interchangeable. Some examples of commercially available acrylated urethane oligomer are as follows: Ebecryl 230 and Ebecryl 4883 sold by Radcure Specialties of Virginia. Ebecryl 230 is 100 percent solids urethane acrylate prepolymer containing no reactive diluents, has a viscosity at 25°C. of 30 to 40 Pa•s, a number average molecular weight of about 5,000, and a functionality of two. Ebecryl 4883 is 85 weight percent urethane acrylate oligomer or

prepolymer and 15 weight percent tripropylene glycol diacrylate, the oligomer has a number average molecular weight of 1,611 and a viscosity at 60°C. in the range of 2.8 to 4.2 Pa•s. Uvithane 782 and Uvithane 783 sold by Morton Thiokol Corporation, Morton Chemical Division, Illinois. Uvithane 782 is a polyester urethane acrylate which has a viscosity at 49°C. of 80 to 160 Pa•s and Uvithane 783 is similar except that it has a viscosity at 49°C. of 60 to 200 Pa•s.

Ingredient (A) is preferably present in an amount of from 25 to 40 weight percent. A preferred acrylated urethane oligomer is a mixture of 3 to 6 weight percent polyester urethane acrylate, such as Uvithane 782, and 19 to 32 weight percent of an acrylated urethane prepolymer having a number average molecular weight from 1,000 to 3,000, such as Ebecryl 4883, for a total of 25 to 35 weight percent acrylated urethane oligomer. Another preferred acrylated urethane oligomer is a mixture of 24 to 37 weight percent of an acrylated urethane prepolymer having a number average molecular weight of 1,000 to 3,000, such as Ebecryl 4883, and 3 to 6 weight percent of an acrylated urethane prepolymer having a number average molecular weight of 3,000 to 6,000, such as Ebecryl 230, for a total of 30 to 40 weight percent acrylated urethane oligomer.

Ingredient (B) of the compositions of this invention is a unique monomer having a low glass transition temperature, $T_g$ which gives the cured films made from these compositions improved flexibility at low temperatures and allows the cured films to pass thermal cycling shock tests. Ingredient (B) is an acrylate selected from an aliphatic monofunctional acrylate ester having a molecular weight less than 1,000, a polybutadiene diacrylate having a molecular weight less than 4,000, a polyoxyalkylated diacrylate having a molecular weight less than 1,000, and a monofunctional acrylate of the general formula

(Formula I)

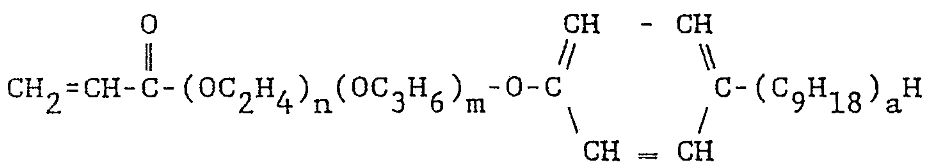

in which at least one of n or m is at least 1 and the total average value of n and m is sufficient to provide a viscosity at 25°C. of 0.01 to 0.2 Pa.s, and a is 0 or 1. An example of an aliphatic monofunctional acrylate ester is C-9013 which is sold by Sartomer Company of Pennsylvania, has a boiling point of 121°C. at 10 mmHg, has a viscosity at 25°C. of 0.005 to 0.015 Pa•s and contains 160 ppm + or - 20 ppm of 4-methoxyphenol. An example of a polybutadiene diacrylate having a molecular weight less than 4,000 is C-5000 sold by Sartomer Company of Pennsylvania, has a number average molecular weight of 3,000, a viscosity at 25°C. of 4.5 to 5 Pa•s, and contains 400 ppm BHT, a butylated hydroxy toluene. An example of a polyoxyalkylated diacylate having a molecular weight less than 1,000 is C-9000 which has a number average molecular weight of 800, a viscosity at 25°C. of 0.12 Pa•s, and 250 ppm of 4-methoxyphenol. Examples of the acrylates having Formula I are shown by the following formulae and are sold by Toagosei Chemical Industry Co., Ltd. of Tokyo, Japan: M-101, having a viscosity at 25°C. of 0.02 Pa•s, a $T_g$ of -25°C., and a formula of

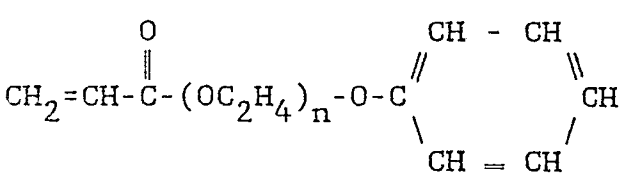 ;

M-111, having a viscosity at 25°C. of 0.08 Pa•s, a $T_g$ of -8°C., and a formula of

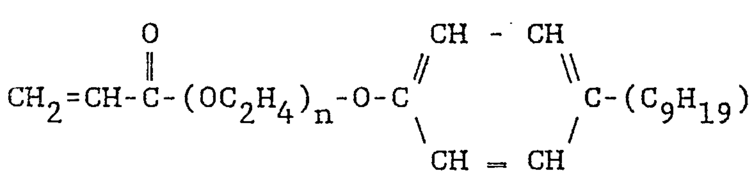 ;

M-113, having a viscosity at 25°C. of 0.11 Pa•s, a $T_g$ of -43°C., and a formula of

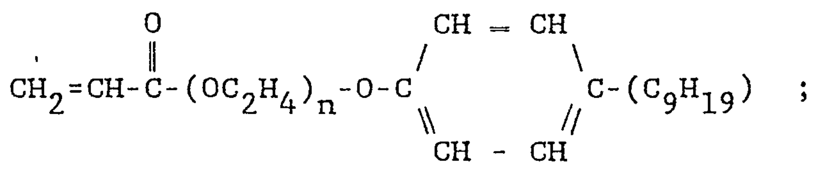

and M-117, having a viscosity at 25°C. of 0.13 Pa•s and a $T_g$ of -20°C., and a formula of

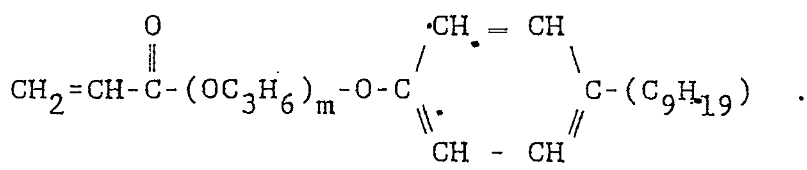

The preferred acrylates of ingredient (B) are those of Formula I and the most preferred is M-113, which is also known as alpha-(1-oxo-2-propenyl)-omega-(nonylphenoxy)-poly(oxy-1,2-ethanediyl). Ingredient (B) is present in an amount of from 5 to 25 weight percent of the composition preferably 10 to 15 weight percent of the composition.

Ingredient (C) of the compositions is an aliphatic bicyclic monofunctional acrylate monomer selected from the group consisting of isobornyl acrylate, isobornyl methacrylate, dicyclopentenyloxyethyl acrylate of the formula

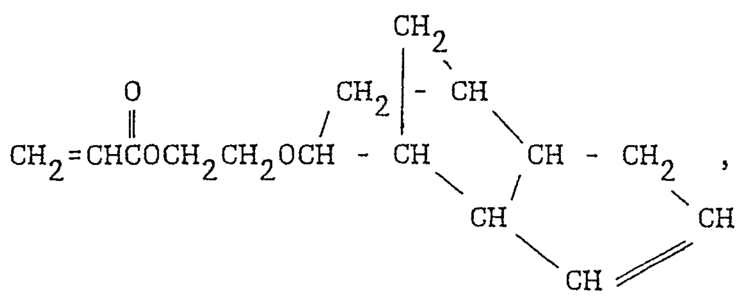

dicyclopentenyloxyethyl methacrylate of the formula

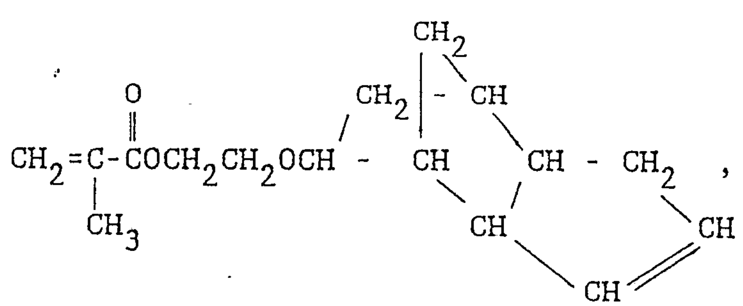

and mixtures thereof. Isobornyl acrylate has a viscosity at 25° C. of about 0.015 Pa•s and usually contains as an inhibitor 100 ppm of 4-methoxyphenol. Isobornyl methacrylate has a viscosity at 25° C. of 0.015 to 0.019 Pa•s. Dicyclopentenyloxy-ethyl acrylate has a viscosity at 25° C. of about 0.02 Pa•s. Dicyclopentenyloxyethyl methacrylate has a viscosity at 25° C. of 0.015 to 0.019 Pa•s. Ingredient (C) is present in an amount of 9.5 to 40 weight percent of the composition, preferably ingredient (C) is present in an amount of 20 to 35 weight percent. The preferred ingredient (C) is dicyclopentenyloxy-ethyl acrylate.

The compositions of the present invention contain a photoinitiator, ingredient (D) to provide the ultraviolet radiation curable property. The photoinitiator can be any of those which are known in the art to cure acrylates and methacrylates. However, neither the photoinitiator nor its by-products should be corrosive to the electronic materials which it will come in contact with during its use. The photoinitiators preferably do not include the halogenated photoinitiators because these are often too corrosive. Illustrative of the photoinitiators of this invention are 2,2-diethoxyacetophenone, benzoin methyl ether, benzoin ethyl ether, benzoin isopropyl ether, alpha-methylbenzoin, alpha-ethyl-benzoin, alpha-methyl benzoin methyl ether, alpha-phenylbenzoin, alpha-allylbenzoin, anthraquinone, methylanthraquinone, ethyl-anthraquinone, tertiary butylanthraquinone, benzil, diacetyl, benzaldehyde, acetophenone, benzophenone, omega-benzoin, 2,3-pentanedione, hydroxycyclohexylphenyl ketone, hydroxymethyl phenylpropanone, and xanthone. The photoinitiator is used in amounts of from 0.5 to 6 weight percent of the composition and which are suitable to provide cure of the composition when it is exposed to ultraviolet radiation. The preferred photoinitiator is 2-hydroxy-2-methyl-1-phenyl-propan-1-one and the preferred amount is from 2 to 5 weight percent of the composition.

The compositions of the present invention can also contain an acrylate ester, ingredient (E), having at least three acrylate or methacrylate groups per molecule and a molecular weight less than 600. These acrylate esters of (E) can be present in amounts of from 0 to 10 weight percent of the composition. Preferably, ingredient (E) is present in an amount of at least 0.1 weight percent of the composition with the most preferred amounts being from 3 to 8 weight percent of the composition. Some examples of ingredient (E) are trimethylolpropane trimethylacrylate (mol. wt. = 338), pentaerythritol tetraacrylate (mol. wt. = 352), ethoxyated trimethylolpropane triacrylate (mol. wt. = 428), pentaerythritol acrylate (contain three acrylate groups, mol. wt. = 298), ditrimethylolpropane tetraacrylate (mol. wt. = 438), trimethylolpropane triacrylate (mol. wt. = 296), and dipentaerythritol monohydroxy pentaacrylate (mol. wt. = 524). These acrylate esters are available commercially and are usually sold with an inhibitor present. Some of these commercially available acrylate esters may also contain small amounts of solvent which is a result of their preparation. The preferred acrylate ester for ingredient (E) is di-pentaerythritol monohydroxy pentaacrylate.

The present compositions of this invention can contain an organic peroxide, ingredient (F), in an amount sufficient to provide cure when the composition is exposed to heat after the composition is cured by exposure to ultra-violet radiation. The amount of organic peroxide can be from 0 to 8 weight percent of the composition. The organic peroxide (F) is one which has a 10 hour half life temperature of from 85°C. to 105°C. inclusive. Peroxides which have this 10 hour half life temperature provides compositions which can be packaged in one container for shipment, i.e. they have an acceptable shelf life for commercial shipping. These peroxides also can be cured at an acceptable temperature when the application is for conformal coatings on printed circuit boards. When the compositions of this invention are used for printed circuit boards which have devices with undercuts, it is preferred to have the organic peroxide of ingredient (F) present in amounts of from 0.1 to 6 weight percent of the composition, so that the compositions can be cured in the shadowed areas by heating. The preferred amount of organic peroxide is at least 0.5 weight percent of the composition, with the most preferred amounts being from 0.5 to 4 weight percent. Thus, the organic peroxide is one which will provide a storage stable uncured composition, which will cure upon heating, and which will not produce acidic by-products that can cause corrosion to electronic materials. Suitable organic peroxides of ingredient (F) include the following where the 10 hour half life temperature is in parentheses following the peroxide name, 1,1-bis(t-butylperoxy) cyclohexane (93°C.), o,o-tertiary-butyl-o-isopropyl monoperoxy carbonate (99°C.), 2,5-dimethyl-2,5-di-(2-ethylhexanoylperoxy)hexane (87°C.), 1,1-di(t-butylperoxy)-3,3,5-trimethylcylcohexane (92°C.), 2,2-di(t-butylperoxy)butane (104°C.), and 1-cyano-1-(t-butylazo) cyclohexane (96°C.). The preferred organic peroxide is 1,1-bis(tertiary-butyl-peroxy) cyclohexane and the preferred amounts of this peroxide are 0.5 to 4 weight percent. It might be possible to use organic peroxides which have 10 hour half life temperatures between 105°C. and 130°C. if the compositions are to be used on substrates which are very heat stable, such as on certain ceramic printed circuit boards. The preferred organic peroxide is 1,1-bis(t-butylperoxy) cyclohexane.

The compositions of this invention can be a hydroxy-containing acryl monomer, ingredient (G), in amounts of from 0 to 10 weight percent of the composition. The hydroxy-containing acryl monomer, (G), can be a hydroxy alkylacrylate or a hydroxyalkylmethacrylate. The hydroxy-containing acryl monomer can be illustrated by hydroxyethyl acrylate, hydroxypropyl acrylate, 4-hydroxy-n-butyl acrylate, hydroxyethyl methacrylate, hydroxypropyl methacrylate, and 4-hydroxy-n-butyl methacrylate. The preferred hydroxy-containing acryl monomer is hydroxyethyl methacrylate. The hydroxy-containing acryl monomer, (G), is preferably present in amounts of 0.5 weight percent of the composition and the more preferred compositions contain from 3 to 9 weight percent of ingredient (G). Ingredient (G) reduces the viscosity of the composition and also increases the adhesion of the cured films to substrates.

The compositions of the present invention can contain a fire retardant, ingredient (H), such as trixylenol phosphate. The amount of fire retardant (H) can be from 0 to 20 weight percent of the composition, preferably in amounts of at least 1 weight percent of the composition. The most preferred composition of this invention contain fire retardant in an amount of from 3 to 10 weight percent and it is preferably trixylenyl phosphate. Because many of the fire retardants can be corrosive to the electronic materials and components, the selection of a fire retardant should be considered carefully and preferably tested before it is used, to determine whether it will be corrosive. The preferred fire retardants are the triorganic phosphates, such as the trixylenyl

phosphate. The halogenated fire retardants are known to be too corrosive to be useful in the compositions of this invention because they corrode the electronic components which come into contact with the cured composition.

The compositions of this invention can contain an adhesion promoter, ingredient (I), in amounts of from 0 to 6 weight percent of the composition. The adhesion promoter of (I) is preferably a phosphorus material of the formula

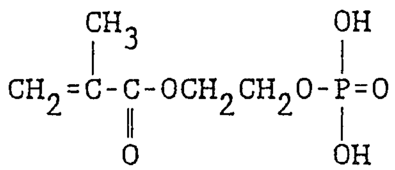

and a mixture of compounds of the formulae

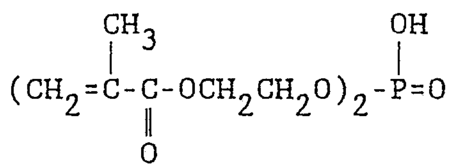

nd

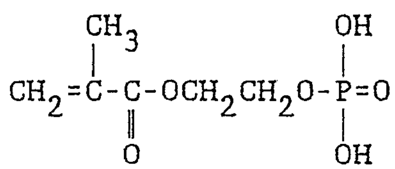

.

These phosphorus materials increase the adhesion of the cured films to various substrates, specifically to copper, tin, G-10 boards, and electronic components. The amount of adhesion promoter (I) is preferably at least 0.1 weight percent of the composition and is preferably the mixture of phosphorus materials defined above in amounts of from 2 to 4 weight percent.

The compositions of this invention need to have from 1 to 1,000 ppm by weight of a polymerization inhibitor present based on the total weight of the composition wherein the inhibitor is derived from 0 to 100 ppm of4-methoxy-phenol, 0 to 500 ppm of hydroquinone, and 0 to 500 ppm of phenothiazine. These inhibitors can be present from the other ingredients or can be added to give the proper shelf stability. The inhibitor of (J) is preferably present in an amount of at least 100 ppm by weight based on the total weight of the composition. The most preferred compositions have from 200 to 500 ppm by weight of polymerization inhibitor where a mixture of hydroquinone and phenothiazine are each present in amounts of from 100 to 300 ppm by weight.

The present composition can also contain a fluorescent dye, ingredient (K), in amounts of from 0 to 0.015 weight percent of the composition. These fluorescent dyes are used to determine the degree of coverage of the films on the printed circuit boards so that one can be sure that the film covers all of the areas necessary and to the film thickness desired or required for a particular printed circuit board. The preferred compositions contain at least 0.005 weight percent of a fluorescent dye and the most preferred compositions contain from 0.005 to 0.01 weight percent of fluorescent dye. An example of a fluorescent dye is Uvitex OB.

The compositions of the present invention may contain other ingredients such as fungicides or colorants, as long as these materials do not add to the corrosive nature of the composition or deleteriously effect the electrical properties of the uncured composition or the cured product.

The composition of this invention is one in which the composition will not corrode the electronic components which it contacts either in the uncured or cured state. The composition is essentially neutral and must not contain ingredients which may change this neutrality. A change in neutrality results in a composition which causes corrosion to materials used in electronic components. For example, the composition of the present invention should not contain amines, such as the tertiary organic amines which are often used as photosensitizers, because these amines cause corrosion to metal substrates found in the electronic components. Also acidic materials should not be used in the compositions of the present invention because these materials also cause corrosion.

The compositions of the present invention are particularly useful in coating and encapsulating electronic

components because the viscosity of the composition is less than 1 Pa.s at 90°F. Circuit boards can be dipped into this coating composition, allowed to drip to an even coat, then exposed to ultraviolet radiation for a few seconds for curing, and in those situations where post curing is required, the coated boards are heated to complete the curing cycle. These compositions can also be sprayed or brushed onto the circuit boards. Under certain coating circumstances or with certain combinations of composition and substrate, dewetting of the coating on the substrate might be experienced. If such a problem is encountered, such as might result from contamination of the substrate surface, a surfactant can be added to the composition. However, surfactants can cause foaming during preparative steps, as well as, during the coating steps and therefore is not recommended. If the use of a surfactant cannot be avoided, a recommended surfactant is one of the glycol siloxane type, such as Dow Corning (R) 57 paint additive. Amounts of surfactant up to about 2 weight percent have been found to be effective. Surfactants may also cause the composition to be hazy. After the curing step or steps are completed, the boards can be tested, used, or shipped immediately. For the purposes of this application the terms printed wire boards and printed circuit boards refer to the same type of article of manufacture.

The compositions of this invention have a long pot life, a long shelf life, low temperature flexibility which is sufficient to provide stress releaving properties on coated printed circuit boards, pass thermal shock test, cure fast, are easy to use in production, are essentially solvent free, are a one package (one part or one component) system, have good electrical properties and can be made flame retardant without substantially changing the other characteristics of the present invention. The shelf life of the compositions of this invention which contain organic peroxide can be extended by keeping the composition from contacting temperature above 25°C., and if one has concern about the stability of the composition on storage, the compositions can be stored under refrigeration.

The compositions of this invention can be prepared by mixing the ingredients. The method of mixing is not particularly critical except that the ingredients should be mixed to homogeneity. Because some of the ingredients may be more viscous than others, the mixing procedure maybe more difficult and slight heating may help readily disperse the ingredients. However, if heat is used, it would be preferred to leave the peroxide out of the mixture until it is cooled to room temperature. The peroxide is sensitive to heat and may cause some unwanted reaction if present during any heating during the preparation procedure. It may also be an advantage if the polymerization inhibitors are present during the early stages of the mixing procedure. After the composition is prepared, it is stored in containers which protect it from ultraviolet radiation until cure is desired. When peroxide is present, care should be taken to avoid high temperatures, especially for prolonged periods of time.

The compositions of this invention can be cured by exposure to ultraviolet radiation, and if peroxide is present thereafter heated to cure any portion of the coating or encapsulant which did not receive ultraviolet radiation. Such heating will cause the composition to cure in the dark regions (regions not receiving ultraviolet radiation exposure) and thus the compositions of this invention have the ability to shadow cure. If these compositions are heat cured before they are exposed to ultraviolet radiation, the surface of the resulting film will be tacky. Surfaces which are tacky are unacceptable on printed circuit boards.

A preferred composition of this invention consists essentially of a blend of (A) from 25 to 35 weight percent of an acrylated urethane oligomer mixture made up of 19 to 32 weight percent acrylated urethane prepolymer and from 3 to 6 weight percent of polyester urethane acrylate, (B) from 10 to 15 weight percent alpha-(1-oxo-2-propenyl)-omega-(nonylphenoxy)-poly(oxy-1,2-ethanediyl) having a viscosity at 25°C. of from 0.1 to 0.12 Pa•s, (C) from 20 to 35 weight percent isobornyl acrylate, (D) from 2 to 3 weight percent 2-hydroxy-2-methyl-1-phenyl-propan-1-one, (E) from 4 to 8 weight percent dipentaerythritol monohydroxy pentaacrylate, (F) from 1.5 to 4 weight percent 1,1-bis-(tertiary-butyl-peroxy) cyclohexane, (6) from 3 to 6 weight percent 2-hydroxyethylmethacrylate, (H) from 5 to 10 weight percent trixylenyl phosphate, (I) from 2 to 3 weight percent of a mixture of compounds of the formulae

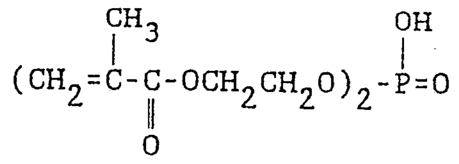

and

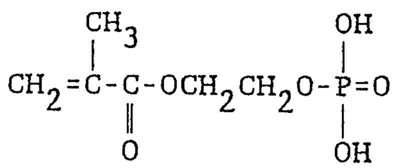

,

(J) from 200 to 500 ppm of a mixture of hydroquinone and phenothiazine each being present in an amount of from 100 to 300 ppm, and (K) from 0.005 to 0.01 weight peroent of a fluoresent dye. This preferred composition exhibits the advantageous properties as described herein for conformal coatings, but it was observed for sone formulations the cured films developed a tackiness on the surface over a short period of time, such as a within one month after being cured. This surface tackiness was more pronounced with formulations containing the higher concentrations of isobornyl acrylate.

Compositions which did not develop this surface tackiness of the cured films were discovered. These compositions are the most preferred and consist essentially of a blend of (A) from 30 to 40 weight percent of a mixture made up of 24 to 37 weight percent of an acrylated urethane prepolymer having a number average molecular weight of from 1,000 to 3,000 and of 3 to 6 weight percent of an acrylated urethane prepolymer having a number average molecular weight of from 3,000 to 6,000, (B) from 10 to 15 weight percent alpha-(1-oxo-2-propenyl) -omega- (nonylphenoxy)-poly(oxy-1,2-ethanediyl) having a viscosity at 25° C. of from 0.1 to 0.12 Pa•s, (C) from 25 to 35 weight percent of dicyclopentenyloxyethyl acrylate, (D) from 3 to 5 weight percent 2-hydroxy-2-methyl-1-phenyl-propan-1-one, (E) from 3 to 7 weight percent dipentaerythritol monohydroxy pentaacrylate, (F) from 0.5 to 2 weight percent 1,l-bis-(tertiary-butyl-peroxy) cyclohexane, (G) from 4 to 9 weight percent 2-hydroxyethylmethacrylate, (H) from 3 to 8 weight percent trixylenyl phosphate, (I) from 2 to 4 weight percent of a mixture of compounds of the formulae

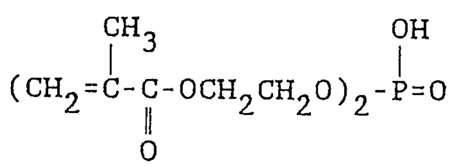

and

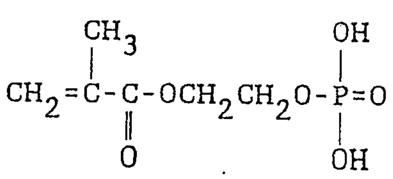

, .

(J) from 200 to 500 ppm of a mixture of hydroquinone and phenothiazine each being present in an amount of from 100 to 300 ppm, and (K) from 0.005 to 0.01 weight percent of a fluorescent dye. These preferred compositions do not develop surface tackiness on the cured film. However, the tensile strength is observed to be a lower value, but still acceptable for conformal coatings. In addition to overcoming cured surface tackiness, those compositions which are used as conformal coatings for printed wire boards desirably contain the 2 to 4 weight percent of the phosphorus containing adhesion promoter to ensure adhesion of the cured

film to the board to prevent board failure due to atomospheric contamination such as moisture (corrosion).

These compositions have solvent resistance to such solvents as xylene, acetone, isopropanol, methyl ethyl ketone, freons, and urethane thinners. Adhesion of the cured compositions to metal and plastic substrates, such as metal leads and plastic connector materials, is obtained. The compositions are non-corrosive before, during and after cure, where cure includes both the ultraviolet cure and the post heat cure. The compositions have the ability to withstand thermal shock from -65° C. to 150° C. The compositions of this invention exhibit a low weight loss upon cure. The compositions exhibit acceptable electrical properties for use as insulative coatings and encapsulants for electronic components, such as volume resistivity and dielectric withstanding voltage. The composition of the present invention exhibits sufficient fungus resistance without the addition of additional fungicides, but in certain applications it may be advantageous to add to this fungus resistance. If additional fungicide is needed, careful evaluation of the fungicide should be conducted to determine its effect on other properties, such as corrosion. The compositions also exhibit humidity resistance and resistance to soldering heat. If fire retardant properties more than provided by the composition are needed, the fire retardant as described above should be used.

The following examples are presented for illustrative purposes and should not be construed as limiting the invention which is properly delineated in the claims. In the following examples, "part" or "parts" represents "part by weight" or "parts by weight", "%" are percent by weight unless otherwise stated.

EXAMPLE 1

A polyester urethane acrylate, Uvithane 782 sold by Morton Thiokol, Inc., Morton Chemical Division, Chicago, Illinois was heated in an oven to a temperature of 120° F. The heated Uvithane 782 was added to a mixing vessel containing isobornyl acrylate and hydroxyethyl methacrylate and then mixed rapidly enough to whip air bubbles into the mixture. When the resulting mixture was homogeneous, the agitation was stopped and the mixture was allowed to cool to room temperature. Once the mixture cooled, alpha(1-oxo-2-propenyl)-omega- (nonylphenoxy)poly(oxy-1 2-ethanediyl) (M-113), trixylenyl phosphate, 2-hydroxy-2-methyl-1-phenyl-propan-1-one (Darocur 1173), and adhesion promoter (PM-2) was added. The mixing blade was then started and acrylated urethane oligomer (4883) and dipentaerythritol monohydroxy pentaacrylate was added. After these ingredients were mixed and the mixture cooled to room temperature, 1,1-bis-(tertiary-butylperoxy)cyclohexane was added and mixing was continued until the resulting mixture was homogeneous. The resulting composition was a conformal coating composition which cured both by exposure to ultraviolet radiation and by heating. The ingredients and their amounts were as shown as follows:

| Percent | Ingredient |
|---|---|
| 4.7 | Uvithane 782 |
| 23.3 | Isobornyl acrylate, QM-589 sold by Rohm and Haas Company of Pennsylvania |
| 4.7 | 2-Hydroxyethyl methacrylate, sold as Rocryl 400 by Rohm and Haas Company of Pensylvania |
| 14.0 | M-113 sold by Toagosei Chemical Industry Co., Ltd. of Tokyo, Japan |
| 7.4 | Trixylenyl phosphate, Kronitex® TXP sold by FMC Corporation, Industrial Chemical Group Pennsylvania |
| 2.8 | Darocur® 1173, sold by EM Chemicals, EM Industries Company, Hawthorne, New York |
| 2.8 | Kayamer PM-2, sold by Nippon Kayaku Co., Ltd., Plastic Division, Tokyo, Japan, this is the mixture of phosphorus material having the formulae described herein for the adhesion promoter |
| 32.6 | Acrylated urethane oligomer, Ebecryl 4883 sold by Radcure Specialities, Virginia, this material is 85 % acrylated urethane oligomer and 15 % tripropylene glycol diacrylate |
| 5.6 | Dipentaerythritol monohydroxy pentaacrylate, SR-399, sold by Sartomer Company, Division of Sartomer Industries, Inc., Pennsylvania |
| 2.3 | 1,1-bis-(t-butylperoxy)cyclohexane, SP-400P sold by Witco Chemical, U.S. Peroxygen Division, California |

This mixture had a viscosity of 0.3 to 0.6 Pa•s at 25° C. When this mixture was exposed to ultraviolet radiation for 2 to 4 seconds, it cured to a film which had a tensile strength at break of 8.3 MPa, a Young's modulus of 63.4 MPa, an elongation at break of 31%, passed 200 cycles for thermal shock according to Mil Spec I 46058C, had a dissipation factor of less than 0.06, had a resistivity greater than $1 \times 10^{12}$, had a breakdown voltage greater than 2000 volts/mil, and had a shelf life greater than 6 months. The tensile strength at break, the elongation at break, and Young's modulus for films cured at different ultraviolet radiation dosages was as shown in Table I.

This composition showed excellent compatibility with materials used to manufacture a printed wire board and cured well by both exposure to ultraviolet radiation and also post cured by heating for 10 minutes at 200° F.

TABLE I

| Radiation Dosage, mJ/cm | Film Thickness, inch | Tensile Stength, MPa | Elongation, % | Young's Modulus, MPa |
|---|---|---|---|---|
| 2456 | 0.014 | 9.85 | 28.8 | 123.7 |
| 4893 | 0.017 | 9.64 | 24.9 | 132.6 |
| 7332 | 0.018 | 10.11 | 24.3 | 160.2 |
| 9596 | 0.017 | 9.26 | 21.5 | 152.4 |

EXAMPLE 2

A number of compositions were prepared by using the method described in Example 1 but using the amounts of ingredients identified in Table II. The compositions contained the ingredients as described in Table II. The viscosity at 25°C. and the specific gravity was determined for each composition. The results are reported in Table III. Each composition was cured at two energy exposure levels of ultraviolet radiation as described in Table IV. The stress at break, the strain at break, and the Young's modulus were determined. The values of these stress-strain evaluation are reported in Table IV.

TABLE II

AMOUNTS, WEIGHT PERCENT

| RUN<br>INGREDIENT | 1 | 2 | 3 | 4 | 5 | 6 | 7 | 8 |
|---|---|---|---|---|---|---|---|---|
| EBECRYL 4883 | 32.02 | 32.02 | 33.35 | 32.92 | 32.02 | 32.02 | 22.87 | 22.87 |
| UVITHANE 782 | 4.57 | 4.57 | 4.76 | 4.70 | 4.57 | 4.57 | 4.57 | 4.57 |
| QM-589 | 22.87 | 22.87 | 23.82 | 23.51 | 22.87 | 22.87 | 32.02 | 32.02 |
| M-113 | 13.64 | 13.64 | 14.21 | 14.02 | 13.64 | 13.64 | 13.64 | 13.64 |
| ROCRYL 400 | 4.57 | 4.57 | 4.76 | 4.70 | 4.57 | 4.57 | 4.57 | 4.57 |
| KRONITEX TXP | 7.31 | 7.31 | 7.61 | 7.52 | 7.31 | 7.31 | 7.31 | 7.31 |
| DAROCUR 1173 | 2.74 | 2.74 | 2.85 | 0.00 | 2.74 | 2.74 | 2.74 | 2.74 |
| SR-399 | 5.49 | 5.49 | 5.72 | 5.64 | 5.49 | 5.49 | 5.49 | 5.49 |
| KAYAMER PM-2 | 2.74 | 2.74 | 2.85 | 2.82 | 2.74 | 2.74 | 2.74 | 2.74 |
| USP400P | 4.00 | 4.00 | 0.00 | 4.11 | 4.00 | 4.00 | 4.00 | 4.00 |
| HQ* | 0.02 | 0.02 | 0.021 | 0.021 | 0.02 | 0.02 | 0.02 | 0.02 |
| PZ** | 0.02 | 0.02 | 0.021 | 0.021 | 0.02 | 0.02 | 0.02 | 0.02 |
| UVITEX OB | 0.009 | 0.009 | 0.009 | 0.009 | 0.009 | 0.009 | 0.009 | 0.009 |

| RUN<br>INGREDIENT | 9 | 10 | 11 | 12 |
|---|---|---|---|---|
| EBECRYL 4883 | 30.79 | 32.67 | 31.17 | 32.46 |
| UVITHANE 782 | 4.39 | 4.66 | 4.45 | 4.63 |
| QM-589 | 21.99 | 23.34 | 22.26 | 23.19 |
| M-113 | 13.12 | 13.92 | 13.28 | 13.83 |
| ROCRYL 400 | 4.39 | 4.66 | 4.45 | 4.63 |
| KRONITEX TXP | 7.03 | 7.46 | 7.12 | 7.41 |
| DAROCUR 1173 | 2.63 | 2.80 | 2.67 | 2.78 |
| SR-399 | 5.28 | 5.60 | 5.34 | 5.57 |
| KAYAMER PM-2 | 2.63 | 2.80 | 2.67 | 2.78 |
| USP400P | 7.69 | 2.04 | 3.89 | 4.06 |
| HQ* | 0.019 | 0.02 | 0.019 | 0.02 |
| PZ** | 0.019 | 0.02 | 0.019 | 0.02 |
| UVITEX OB | .009 | 0.009 | 0.009 | 0.009 |

*HQ represents hydroquinone
**PZ represents phenothiazine

TABLE III

| RUN | VISCOSITY Pa.s | SPECIFIC GRAVITY |
|---|---|---|
| 1 | 0.64 | 1.07 |
| 2 | 0.720 | 1.07 |
| 3 | 0.820 | 1.07 |
| 4 | 0.820 | 1.07 |
| 5 | 0.720 | 1.07 |
| 6 | 0.720 | 1.07 |
| 7 | 0.300 | 1.06 |
| 8 | 0.284 | 1.06 |
| 9 | 0.680 | 1.07 |
| 10 | 0.580 | 1.07 |
| 11 | 0.640 | 1.08 |
| 12 | 0.760 | 1.07 |

TABLE IV

| RUN | CURED AT 3200 mJ | | | CURED AT 6200 mJ | | |
|---|---|---|---|---|---|---|
| | STRESS MPa | STRAIN % | YOUNG'S MODULUS MPa | STRESS MPa | STRAIN % | YOUNG'S MODULUS MPa |
| 1 | 5.9 | 28 | 64.4 | 7.1 | 30 | 82.0 |
| 2 | 7.0 | 29 | 61.1 | 6.1 | 24 | - |
| 3 | 10.7 | 32 | 134.8 | 8.5 | 35 | - |
| 4 | DID NOT CURE | | | DID NOT CURE | | |
| 5 | 7.5 | 27 | 78.0 | 7.6 | 29 | - |
| 6 | 7.4 | 28 | 72.0 | 7.9 | 33 | - |
| 7 | 10.2 | 32 | 80.1 | 8.0 | 31 | - |
| 8 | 5.8 | 22 | 88.8 | 8.3 | 31 | - |
| 9 | 7.6 | 29 | 62.6 | 8.1 | 29 | - |
| 10 | 6.2 | 33 | 41.9 | 7.4 | 33 | - |
| 11 | 6.7 | 31 | 49.6 | 7.6 | 39 | - |
| 12 | 7.7 | 29 | 77.9 | 8.0 | 32 | 82.0 |

EXAMPLE 3

A composition in accordance with this invention was prepared by blending at room temperature in a container which protects the composition from exposure to ultraviolet radiation, until the mixture was homogeneous Eberyl 4883, Ebecryl 230, QM-672, 2-hydroxyethyl methacrylate, alpha-(1-oxo-2propenyl)-omega-(nonylphenoxy)-poly(oxy-1,2-ethanediyl) (M-113), trixylenyl phosphate, 2-hydroxy-2-methyl-1-phenylpropan-1-one (Darocur 1173), adhesion promoter (PM-2), dipentaerythritol monohydroxy pentaacrylate, fluorescent dye, inhibitors, and 1,1-bis-(tertiary-butyl-peroxy) cyclohexane. The resulting composition was a conformal coating composition which cured both by exposure to ultraviolet radiation and by heating. The ingredients and their amounts were as shown as follows:

| Percent | Ingredient |
|---|---|
| 4.3 | Acrylated urethane prepolymer, Ebecryl 230 sold by Radcure Specialties, Virginia |
| 28.5 | Dicyclopentenyloxyethyl acrylate, QM-672 sold by Rohm and Haas Company of Pennsylvania |
| 7.5 | 2-Hydroxyethyl methacrylate, sold as Rocryl 400 by Rohm and Haas Company of Pennsylvania |
| 13.0 | M-113 sold by Toagosei Chemical Industry Co., Ltd, of Tokyo, Japan |
| 4.3 | Trixylenyl phosphate, Kronitex® TXP sold by FMC Corporation, Industrial Chemical Group Pennsylvania |
| 4.1 | Darocur® 1173, sold by EM Chemicals, EM Industries Company, Hawthorne, New York |
| 2.7 | Kayamer PM-2, sold by Nippon Kayaku Co., Ltd., Plastic Division, Tokyo, Japan, this is the mixture of phosphorus material having the formulae described herein for the adhesion promoter |
| 30.2 | Acrylated urethane oligomer, Ebecryl 4883 sold by Radcure Specialties, Virginia, this material is 85 % acrylated urethane oligomer and 15 % tripropylene glycol diacrylate |
| 4.3 | Dipentaerythritol monohydroxy pentaacrylate, SR-399, sold by Sartomer Company, Division of Sartomer Industries, Inc., Pennsylvania |
| 1.0 | 1,1-bis-(t-butylperoxy)cyclohexane, SP-400P sold by Witco Chemical, Y.S. Peroxygen Division, California |
| 0.009 | Uvitex OB, fluorescent dye |
| 200 ppm | Hydroquinone |
| 200 ppm | Phenothiazine |

This mixture had a viscosity of 0.42 Pa•s at 25° C., HAV, spindle number 3, 50 rpm, at 2 minutes. When this mixture was exposed to ultraviolet radiation in the dosage stated in Table V, it cured to a film (thickness of cured film shown in Table V) which had a tensile strength at break, a Young's modulus, and an elongation at break as shown in Table V. The cured film had a dissipation factor of 0.0498 at 100 Hz and 0.0467 at 100 kHz. The cured film had a dielectric constant of 5.879 at 100 Hz and 4.752 at 100 kHz. The cured film at a volume resistivity of $2x10^{14}$. The cured film exhibited a 1.2% weight loss after 24 hours at 200° C. and a water uptake of 1.58%, in 24 hours. The surface of the cured film did not become tacky in more than one month. The composition had s shelf life greater than 6 months. This composition showed excellent compatibility with materials used to manufacture a printed wire board and cured well by both exposure to ultraviolet radiation and also post cured by heating for 10 minutes at 200°F.

TABLE V

| Radiation Dosage, mJ/cm | Film Thickness, inch | Tensile Stength, MPa | Elongation, % | Young's Modulus, MPa |
|---|---|---|---|---|
| 2420 | 0.014 | 5.78 | 28.2 | 36.8 |
| 4798 | 0.014 | 5.45 | 24.2 | 40.6 |
| 7222 | 0.016 | 5.86 | 22.5 | 55.6 |
| 9580 | 0.014 | 5.81 | 21.2 | 56.8 |

**Claims**

1. A ultraviolet curable composition consisting essentially of a blend of

(A) 20 to 45 weight percent of an acrylated urethane oligomer containing an average of about 2 acryl groups selected from the group consisting of acrylate and methacrylate, said acrylated urethane oligomer being based on aliphatic isocyanate, and having a number average molecular weight of from 1,000 to 6,000,

(B) 5 to 25 weight percent of an acrylate selected from the group consisting of an aliphatic monofunctional acrylate ester having a molecular weight less than 1,000, a polybutadiene diacrylate having a molecular weight less than 4,000, a polyoxyalkylated diacrylate having a molecular weight less than 1,000, and a monofunctional acrylate of the general formula

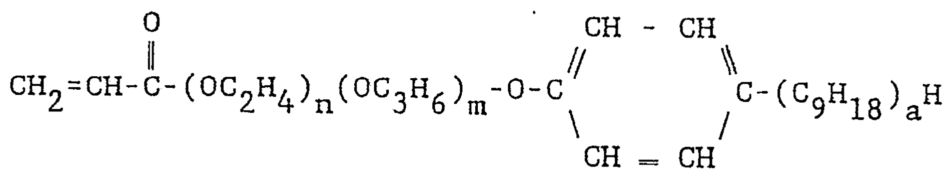

in which at least one of n or m is at least 1 and the total average value of n and m is sufficient to provide a viscosity at 25°C. of 0.01 to 0.2 Pa.s, and a is 0 or 1,

(C) 9.5 to 40 weight percent of an aliphatic bicyclic monofunctional acrylate monomer selected from the group consisting of isobornyl acrylate, isobornyl methacrylate, dicyclopentenyloxyethyl acrylate, dicyclopentenyloxyethyl methacrylate, and mixtures thereof,

(D) 0.5 to 6 weight percent of photoinitiator,

(E) 0 to 10 weight percent of an acrylate ester having at least three acrylate or methacrylate groups per molecule and having a molecular weight less than 600,

(F) 0 to 8 weight percent of a peroxide having a 10 hour half life temperature of from 85°C. to 105°C. inclusive,

(G) 0 to 10 weight percent of a hydroxy-containing acryl monomer selected from the group consisting of hydroxyalkyl-acrylate and hydroxyalkylmethacrylate,

(H) 0 to 20 weight percent of a fire retardant,

(I) 0 to 6 weight percent of an adhesion promoter,

(J) 1 to 1,000 ppm of polymerization inhibitor in which the inhibitor is derived from 0 to 100 ppm of 4-methoxyphenol, 0 to 500 ppm of hydroquinone, and 0 to 500 ppm of phenothiazine,

(K) 0 to 0.015 weight percent of a fluorescent dye, and the composition has a viscosity at 90°F. of less than 1 Pa•s.

2. The composition according to claim 1 in which the oligomer of (A) is a mixture of oligomers having different molecular weights.

3. The composition according to claim 1 in which the acrylate ester of (E) is selected from the group consisting of trimethylol propane triacrylate, di-trimethylol propane tetraacrylate, pentaerythritol triacrylate, dipentaerythritol monohydroxy pentaacrylate, pentaerythritol tetraacrylate, trimethylolpropane trimethacrylate, and ethoxyated trimethylolpropane triacrylate.

4. The composition according to claim 1 in which the acrylate of (B) is present in an amount of from 10 to 15 weight percent, the aliphatic bicyclic monofunctional acrylate monomer of (C) is present in an amount of from 20 to 35 weight percent, the photoinitiator of (D) is present in an amount of from 2 to 5 weight percent, the acrylate ester of (E) is present in an amount of from 3 to 8 weight percent, the peroxide of (F) is present in an amount of from 0.5 to 4 weight percent, the hydroxy-containing acryl monomer of (G) is present in an amount of from 3 to 9 weight percent, the fire retardant of (H) is present in an amount of from 3 to 10 weight percent, the adhesion promoter of (I) is present in an amount of from 2 to 4 weight percent, the polymerization inhibitor of (J) is present in an amount of from 200 to 500 ppm, and the fluorescent dye of (K) is present in an amount of from 0.005 to 0.01.

5. The composition according to claim 1 in which the acrylate ester of (E) is present in an amount of at least 0.1 weight percent, the peroxide of (F) is present in an amount of from 0.5 to 4 weight percent, the hydroxyl-containing acryl monomer of (G) is present in an amount of at least 0.5 weight percent, the fire retardant of (H) is a triaryl phosphate and is present in an amount of at least 1 weight percent, the adhesion promoter of (I) is a phosphorus material selected from the group consisting of a compound of the formula

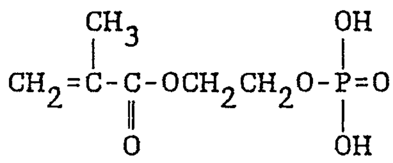

and a mixture of compounds of the formulae

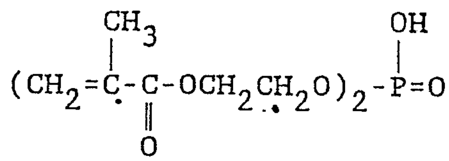

and

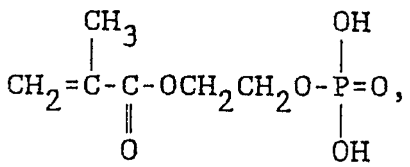

and is present in an amount of at least 0.1 weight percent, the polymerization inhibitor of (J) is present in an amount of at least 100 ppm, and the fluorescent dye of (K) is present in an amount of at least 0.005 weight percent.

European Patent Office

# EUROPEAN SEARCH REPORT

Application Number

EP 89 30 1490

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 250 779 (SOCIETE DES VERNIS BOUVET)<br>* Page 6, example 3; page 2, lines 14-30 *<br>----- | 1 | C 08 F 220/10<br>C 08 F 299/06 //<br>(C 08 F 220/10<br>C 08 F 299:06<br>C 08 F 220:10 )<br>(C 08 F 299/06<br>C 08 F 220:28<br>C 08 F 220:28<br>C 08 F 220:30<br>C 08 F 230:02<br>C 08 F 220:02 ) |
| | | | TECHNICAL FIELDS SEARCHED (Int. Cl.4) |
| | | | C 08 F<br>C 09 D |

The present search report has been drawn up for all claims

| Place of search | Date of completion of the search | Examiner |
|---|---|---|
| THE HAGUE | 05-06-1989 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document